# EUROPEAN PATENT SPECIFICATION

(11) **EP 3 763 201 B1**
(45) Date of publication and mention of the grant of the patent: **11.05.2022**
(21) Application number: 20184649.0
(22) Date of filing: 08.07.2020
(51) Int. Cl.: A01G 13/02

(54) **MULCHING MACHINE FOR LAYING COVERING CLOTH OVER A GROUND AND METHOD FOR OPERATING SAID MACHINE**
MULCHMASCHINE ZUM AUSLEGEN VON ABDECKTUCH AUF EINEM BODEN UND VERFAHREN ZUM BETRIEB DER BESAGTEN MASCHINE
MACHINE DE PAILLAGE POUR LA POSE D'UN TISSU DE REVÊTEMENT SUR UN SOL ET PROCÉDÉ DE FONCTIONNEMENT DE LADITE MACHINE

(30) Priority: 08.07.2019 IT 201900011169
(43) Date of publication of application: 13.01.2021
(73) Proprietor: ROTER ITALIA S.r.l., 46035 Ostiglia (MN) (IT)
(72) Inventor: FORIGO, Alberto, 46035 Ostiglia (MN) (IT)
(74) Representative: Gallo, Luca

(56) References cited:
- WO-A1-2012/061918
- CN-A- 107 624 290
- FR-A1- 2 988 560
- KR-B1- 101 791 382

## Description

### Field of application

The present invention regards a mulching machine for laying a covering cloth over a ground and a method for operating said machine, in accordance with the preamble of the respective independent claims.

The present machine is inserted in the context of the industrial field of production of farming machines and is intended to lay a covering cloth over a ground on which it is intended to advance, advantageously towed by a tractor.

In particular, the present mulching machine is of automated type, i.e. it is able to execute the cutting and the burying of the covering cloth without requiring the manual intervention of an operator.

Therefore, the mulching machine, object of the present invention, advantageously has use in the farming and horticultural sectors.

### State of the art

For some time in agriculture, the practice of "mulching" has been known which provides for laying at least one covering layer over a ground to be cultivated, so as to prevent the growth of weeds, or more generally protect the ground from external agents and maintain the properties thereof without requiring further treatments. In particular, the covering layer used for attaining the mulching can be constituted by a covering cloth made of plastic or bioplastic material, or it can be constituted by a moderate layer of biological material, such as bark, hay, stones or other items. In addition, in the case of mulching with covering cloths, the latter are generally arranged wound in reels, which are unrolled directly on the ground to be cultivated, for example before the sowing operations.

For such purpose, mulching machines are known in the field of production of farming machines, which carry the reel of covering cloth mounted thereon and they are adapted to lay the latter on the ground so as to attain the mulching of the ground itself. More in detail, the mulching machines of known type are generally provided with means for laying the covering cloth, which are adapted to unroll the reel while the mulching machine advances along the ground and to deposit the covering cloth on the ground itself, thus attaining the covering of a strip of ground, above which the mulching machine has been moved. In particular, laying means are known comprising a pair of wheels idly mounted on the frame of the mulching machine and interposed between the reel of the covering cloth and the ground and placed in contact with both. In operation, during the advancing of the mulching machine, each idle wheel is susceptible of rotating, driven by the ground via rolling friction and consequently also rotating the reel, which is thus unrolled, and the cloth is unwound, driven by the rotation of the idle wheels, depositing a strip of the covering cloth on the ground.

Generally, the mulching machines of known type are also provided with means for the lateral earthing up of the laid strip of covering cloth, which are adapted to turn over the ground at the sides of the laid strip in order to at least partially bury the lateral edges of the latter, thus retaining it in position.

Such mulching machines of known type, briefly described up to now, have in practice shown that they do not lack drawbacks.

The main drawback lies in the fact that the mulching machines of known type require the intervention of an operator at the start and at the end of every operation of laying the covering cloth, so as to manually earth up also the initial end and the final end of the laid strip of covering cloth.

In addition, such mulching machines of known type require the intervention of an operator also for cutting the strip of cloth once the laying step has been completed, so as to separate it from the reel, making the final end of the strip itself. Such interventions of cutting and earthing up the two ends of the strip increase the working times of a ground, especially in the case of very large terrains in which it is necessary to execute multiple laying operations, in order to lay multiple covering cloths one next to the other.

For the purpose of overcoming such drawback, mulching machines are known that are provided with automatic earthing up means. In particular, the earthing up means of known type comprise a bar transverse to the advancement direction of the machine and rotatably mounted on the frame of the mulching machine, substantially parallel and in proximity to the ground, such bar is susceptible of being moved along an arc of circumference trajectory between a first position, in which it is arranged on the rear part of the reel of the covering cloth, and a second position, in which it is arranged on the front part of the reel itself. More in detail, between the first and the second position, the transverse bar passes below with respect to the reel and intercepts the ground.

In operation, at the start of the operation of laying the strip of covering cloth, the transverse bar is actuated to be moved from the first to the second position, completing the curved trajectory during which it intercepts the ground and lifts a quantity thereof, which is then released and deposited on the initial end of the laid strip of the cloth, burying it.

In addition, at the end of the operation of laying the strip of covering cloth, the transverse bar is actuated in a second movement in order to be moved from the second to the first position. During such second movement, the transverse bar first intercepts the strip of covering cloth, breaking it and making the final end of the strip itself and then intercepts the ground, lifting another quantity of ground and depositing it on the final end of the cloth, also burying the latter. Also the latter solution of mulching machine, provided with the transverse bar for the automatic earthing up of the two ends of the covering cloth, has in practice shown that it does not lack drawbacks.

The main drawback lies in the fact that it is not possible to each time vary the trajectory that the transverse bar executes between the first and the second position, and hence it is not possible to vary the quantity of ground lifted by the bar, for example in order to be able to more greatly bury a covering cloth.

A further drawback lies in the fact that, simultaneously with the covering cloth, the mulching machines of known type can also lay, simultaneously with the covering cloth, one or more small channels for irrigation of the ground, each of which laid by the mulching machine interposed between the covering cloth and the ground. Such small channels for irrigation are generally made of a material that is stronger than the covering cloth and hence they are not broken by the actuation of the transverse bar, but they can be damaged by the latter, compromising the correct operation thereof. Consequently, if the mulching machine must attain the laying of the covering cloth, as well as of the small channel for irrigation, it is still necessary for an operator to intervene in order to attain the cutting and the earthing up of the final end of the covering cloth, in a manner such to not damage the small channel for irrigation with the actuation of the transverse bar.

Known from document FR 2988560 is a mulching machine provided with a toothed roller, rotatably associated with the frame of the mulching machine, interposed between a reel for unwinding the covering cloth and means for laying the cloth itself. First movement means for moving the roller are also provided, adapted to move it close to or away from the ground, and second movement means of the roller are provided which are adapted to rotate it.

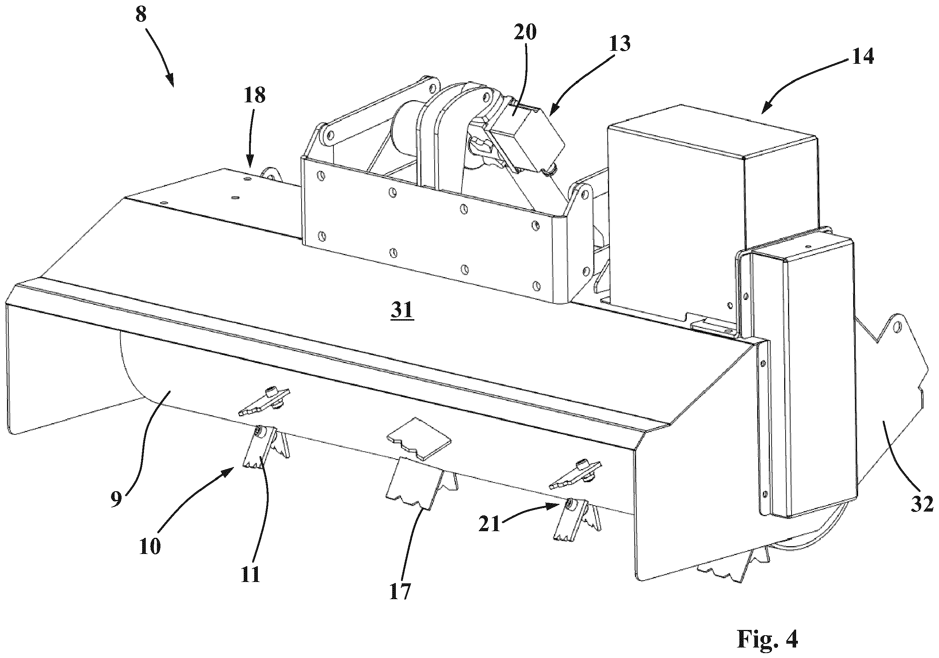

In operation, the first movement means move the roller close to the ground, bringing it to intercept the covering cloth upstream with respect to the laying means. In addition, the roller cuts the cloth by means of its rotation when the cloth itself is still lifted from the ground, as can be appreciated from figure 4.

One drawback of this mulching machine of known type lies in the fact that it is unable to precisely cut the final end of the strip of covering cloth. Indeed, following the cutting, the final end of the strip is free to fall on the ground in an imprecise position. The covering cloths generally employed have thicknesses of several microns and a slight breeze will suffice (e.g. due to the rotation of the toothed roller) for moving them, varying the position in which the final end of the strip touches down on the ground.

In order to overcome the latter drawback, this mulching machine of known type comprises a bar for retaining the cloth, which is interposed between the toothed roller and the reel of the covering cloth and is connected to suction means for suctioning the covering cloth and retaining it in position. In addition, such retention bar is movable by the first movement means of the toothed roller together with the latter, in order to accompany the covering cloth in moving close to the ground during the cutting and the earthing up executed by the toothed roller.

Also such arrangement of the retention bar has in practice shown that it does not lack drawbacks. In particular, tied to the fact that the suction bar is arranged on the front part with respect to the toothed roller, therefore, following the cutting of the cloth, the final end of the strip of covering cloth to be buried is newly free to fall to the ground in an uncontrolled position.

### Presentation of the invention

The main object of the present invention is therefore that of overcoming the drawbacks manifested by the solutions of known type, by providing a mulching machine for laying a covering cloth on the ground and an operating method thereof which allow carrying out in an automatic manner, without requiring the intervention of an operator, the cutting and the earthing up of the covering cloth, also if present a small channel for irrigation.

Another object of the present invention is to provide a mulching machine and an operating method thereof which allow precisely burying the final end and and the initial end of the strip of covering cloth.

Another object of the present invention is to provide a mulching machine and an operating method thereof which allow each time varying the quantity of ground with which the two ends of the laid covering cloth are buried.

Another object of the present invention is to provide a mulching machine that is entirely functional and reliable.

Another object of the present invention is to provide a mulching machine that is easy and intuitive to use.

Another object of the present invention is to provide a mulching machine that is durable over time and does not require frequent maintenance operations.

### Brief description of the drawings

The technical characteristics of the invention, according to the aforesaid objects, are clearly seen from the content of the below-reported claims and the advantages thereof will be more evident from the following detailed description, made with reference to the enclosed drawings, which represent a merely exemplifying and non-limiting embodiment of the invention in which:
- figure 1 shows a perspective view of a mulching machine for laying a covering cloth over a ground, object of the present invention;
- figure 2 shows a side view of the machine of figure 1, in which some parts have been removed in order to better comprehend other parts;

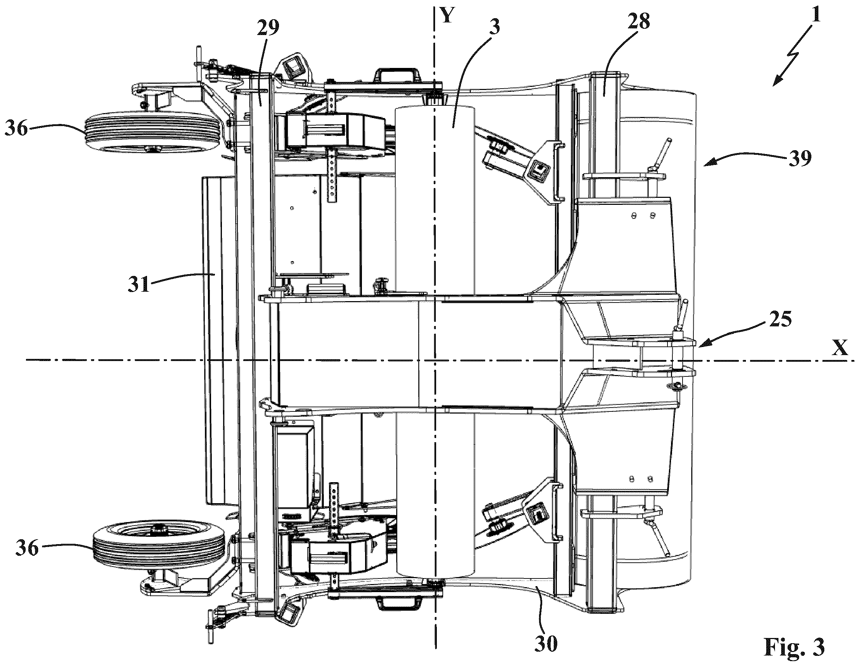

- figure 3 shows a top plan view of the machine of figure 1;
- figure 4 shows a perspective view of a detail of the machine of figure 1 relative to its earthing up means;
- figure 5 shows a top plan view of the detail of figure 4, in which some elements are indicated transparent in order to better comprehend other elements;
- figure 6 shows a sectional view of the earthing up means of the present mulching machine, made along the sectional trace VI-VI of figure 5;
- figure 7 shows a top plan view of a detail of figure 4, in which some elements have been removed in order to better comprehend other elements and other parts have been indicated with dashed line in order to better comprehend the entirety thereof;
- figure 8 shows a schematic diagram of a logic control unit of the mulching machine, object of the present invention;
- figures 9 and 10 show two schematic views of two steps of the method for operating the mulching machine, object of the present invention, and respectively show a first and a second earthing up step of the aforesaid method.

### Detailed description of a preferred embodiment

With reference to the enclosed drawings, reference number 1 overall indicates a mulching machine for laying a covering cloth over a ground to be covered. More in detail, the mulching machine 1, object of the present invention, is adapted to lay on the ground at least one strip 7 of a covering cloth 4 so as to execute operations of mulching of the ground itself.

In particular, the aforesaid mulching machine is advantageously employed for laying covering cloths 4 over farming terrain to be cultivated, for example before executing sowing operations. Advantageously, in fact, the covering cloth 4 is susceptible of preventing the growth of weeds that can damage the growth of the cultivations to be sown on the farming terrain. In addition, the covering cloth 4 is susceptible of protecting the ground from external agents and maintaining the properties thereof without requiring further treatments.

The mulching machine 1 is also susceptible of advancing along the ground to be covered, for example towed by a tractor or in a self-propelled manner. In the latter case the mulching machine 1 is thus provided with its own locomotion means.

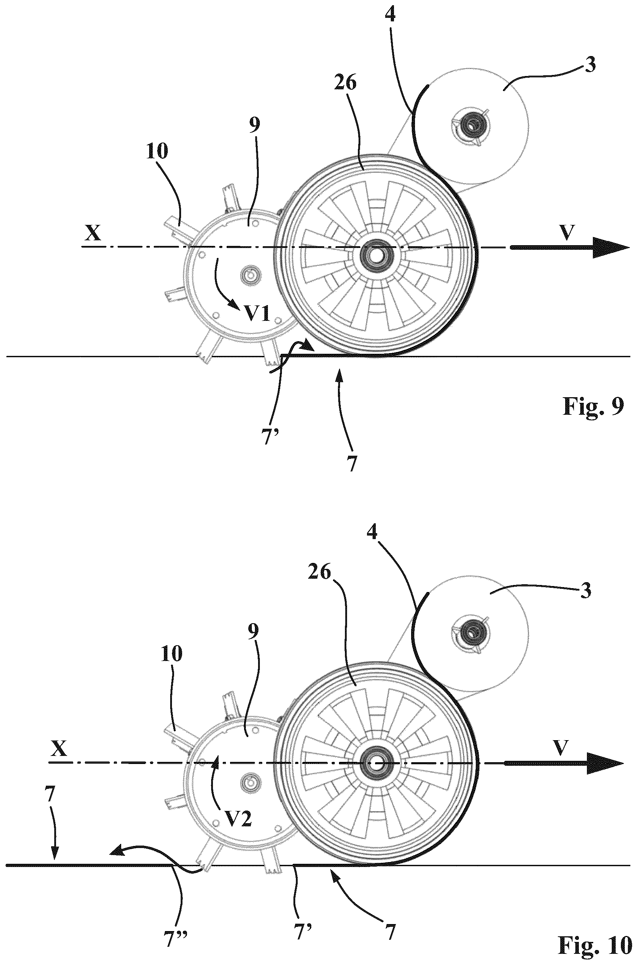

More in detail, the mulching machine 1, object of the present invention, is susceptible of advancing on the ground along an advancement direction X, and in particular it is susceptible of advancing in an advancing sense V (indicated with an arrow in the enclosed figures 9 and 10) along the aforesaid advancement direction X.

Advantageously, in the present description, portions of the mulching machine 1 directed in the same sense as the advancing sense V of the mulching machine 1 itself will be indicated with the term "front". In addition, portions of the mulching machine 1 directed in a sense opposite the advancing sense V of the mulching machine 1 will be indicated with the term "rear". According to the invention, the mulching machine 1 comprises a support frame 2 susceptible of advancing on the ground along the advancement direction X, e.g. towed by a tractor or in a self-propelled manner.

In accordance with the preferred embodiment illustrated in the enclosed figures, the mulching machine 1 is intended to be towed by the tractor (not illustrated), advantageously in fact the support frame 2 is provided with coupling points 25 arranged at a front portion of the support frame 2 and at which the tractor is susceptible of being attached. For example, in accordance with the enclosed figures, the aforesaid coupling points 25 are of three-point attachment type, per se known to the man skilled in the art and therefore not described in detail hereinbelow.

In addition, in accordance with the enclosed figures, the support frame 2 of the mulching machine 1 comprises a front crosspiece 28 and a rear crosspiece 29, substantially parallel to each other and each placed along an axis substantially orthogonal with respect to the advancement direction X of the mulching machine 1 itself, and in particular along a substantially horizontal direction. In addition, the support frame 2 advantageously comprises two lateral flanks 30 placed to mechanically connect between the front crosspiece 28 and the rear crosspiece 29.

Preferably, the support frame 2 is made of metallic material, in particular a metallic material that is resistant to the stresses to which the support frame 2 is intended to be subjected during its operating lifetime, such as for example steel.

According to the invention, the mulching machine 1 also comprises at least one reel 3 of the covering cloth 4 intended to be laid on the ground. In particular, the covering cloth 4 is advantageously of the type commonly intended for ground mulching operations, for example it is a cloth made of plastic or bioplastic material and is preferably provided with a thickness comprised between 10 and 50 micron and more preferably comprised between 15 and 30 micron.

The reel 3 is also rotatably associated with the support frame 2 by means of support means 5. Advantageously, moreover, the reel 3 is supported by the support means 5 in a position raised from the ground and preferably it is supported with a main extension axis Y thereof substantially parallel to the ground and preferably orthogonal to the advancement direction X. More in detail, the support means 5 of the reel 3 advantageously comprise a pair of support brackets, each of which extended between a first end, pivoted to a corresponding lateral flank 30 of the support frame 2, and an opposite second end on which the reel 3 is rotatably mounted. The mulching machine 1, object of the present invention, also comprises laying means 6 mechanically associated with the support frame 2 and interposed between the reel 3 and the ground. The aforesaid laying means 6 are adapted to unroll the strip 7 of covering cloth 4 from the reel 3 and to lay such strip 7 on the ground. In operation, during the advancing of the mulching machine 1 along the advancing sense V, the laying means 6 are adapted to guide the covering cloth 4 from the reel 3 to the ground. In this manner, therefore, the strip 7 of covering cloth 4 is laid on the ground on the rear part of the mulching machine 1.

More in detail, in accordance with the embodiment illustrated in the enclosed figures, the laying means 6 comprise a first pair of idle wheels 26 mounted on the two lateral flanks 30 of the support frame 2 and susceptible of rotating via rolling friction with the ground during the advancing of the mulching machine 1.

In addition, the support means 5 are advantageously adapted to support the reel 3 in abutment against the first pair of idle wheels 26 of the laying means 6. In operation, therefore, during the advancing of the mulching machine 1 along the advancement direction X, the first pair of idle wheels 26 tangentially intercepts the reel 3, bringing it into rotation by means of rolling friction. The first pair of idle wheels 26 also forces the covering cloth 4 to be unwound from the reel 3, and drives it in rotation around an external surface thereof up to intercepting the ground, on which the cloth is deposited.

The present mulching machine 1 also comprises earthing up means 8 mechanically associated with the support frame 2 and adapted to at least partially bury the strip 7 of covering cloth 4 laid on the ground. More in detail, the aforesaid earthing up means 8 are adapted to turn over the ground in proximity to the strip 7 so as to at least partially bury such strip 7 in order to retain it in position. In particular, in addition, the earthing up means 8 are adapted to turn over the ground in proximity to an initial end 7' and a final end 7" of the strip 7 with respect to the advancement direction X, as is better described hereinbelow in the description of a method for operating the present mulching machine 1.

According to the invention, the aforesaid earthing up means 8 comprise a roller 9, rotatably associated with the support frame 2 and provided with a rotation axis Z placed substantially parallel to the ground and substantially orthogonal to the advancement direction X.

Preferably, in addition, the roller 9 is mounted on the support frame 2 on the rear part with respect to the laying means 6, so as to allow the earthing up means 8 to operate on the strip 7 of covering cloth 4 when the same cloth 7 is laid in abutment against the ground. Advantageously, in this manner, the earthing up means 8 act on the strip 7 just laid on the ground and turn over the ground in proximity to the cloth 7 substantially along the entire extension thereof (i.e. along the entire width of the cloth) at the first and second ends 7', 7" of the strip 7. In particular, the roller 9 is rotatably mounted on a movable frame 18, which is in turn mechanically associated with the support frame 2, as is described more in detail hereinbelow.

In addition, the earthing up means 8 comprise a plurality of teeth 10 mechanically connected to the roller 9 and projecting outside the latter radially with respect to its rotation axis Z. In particular, the teeth 10 are preferably removably fixed to the roller 9 by means of removable fixing means 21, better described hereinbelow.

In addition, the present mulching machine 1 comprises first movement means 13, placed to mechanically connect between the support frame 2 and the roller 9. The aforesaid first movement means 13 are adapted to move the roller 9, and in particular the movable frame 18 on which the roller 9 itself is mounted, between an interference position, in which the roller 9 is in a distal position with respect to the support frame 2 and at least one of the teeth 10 is susceptible of intercepting the ground, and a non-interference position, in which the roller 9 is in a proximal position with respect to the support frame 2 and the teeth 10 are susceptible of not intercepting the ground.

The mulching machine 1 also comprises second movement means 14 mechanically associated with the roller 9 and adapted to rotate the latter around its rotation axis Z.

In accordance with the idea underlying the present invention, the second movement means 14 are adapted to rotate the roller 9 alternately in a first rotation sense V1 and in a second rotation sense V2, opposite with respect to the first rotation sense V1.

More in detail, in accordance with the enclosed figure 10, the second rotation sense V2 is in the same sense as the advancing sense V of the mulching machine 1, i.e. it is in the same sense as the rotation sense of the wheels of the tractor during its movement along the advancing sense V, and preferably it is in the same sense as the rotation sense of the first pair of idle wheels 26 of the laying means 6. Consequently, the first rotation sense V1 is in the opposite sense with respect to the advancing sense V of the present mulching machine 1.

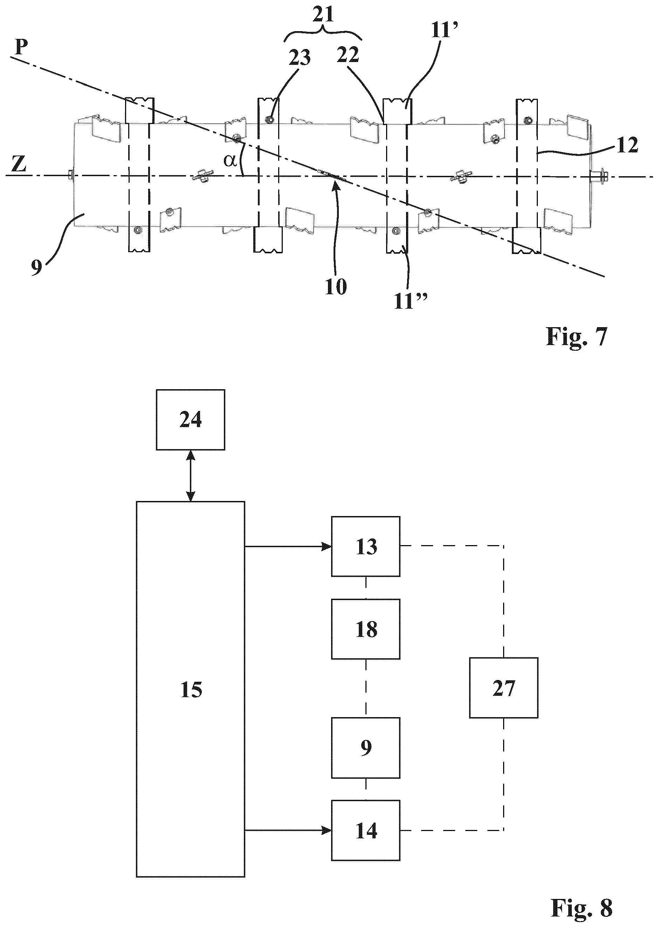

In addition, the mulching machine 1 comprises a logic control unit 15 operatively connected to the first and to the second movement means 13, 14, for example as schematically illustrated in the enclosed figure 8. More in detail, the logic control unit 15 is advantageously connected to the first and to the second movement means 13, 14 by means of a data transmission electrical wiring, well known to the man skilled in the art and therefore not described in detail hereinbelow.

The aforesaid logic control unit 15 is configured for driving the second movement means 14 to rotate the roller 9 in the two opposite rotation senses V1, V2, with the roller 9 in the interference position, in order to earth up the two opposite ends 7' ,7" of the strip 7 with the teeth 10 rotating in the two rotation senses V1, V2.

More in detail, the logic control unit 15 is advantageously configured for selecting the rotation sense V1, V2 along which the roller 9 is rotated, and hence also the teeth 10 are rotated. In addition, since the roller 9 is in the interference position, the teeth 10 which rotate in the two rotation senses V1, V2 intercept and turn over the ground, in order to at least partially bury the strip 7 of covering cloth 4 that was previously spread out on the ground.

In operation, by moving the roller 9 around its rotation axis Z in the aforesaid interference position, the teeth 10 intercept the ground and turn it over in order to lift a specific quantity of ground which is then left to fall at one between the first and second end 7', 7" of the strip 7, at least partially burying it.

In addition, with the roller 9 placed in the interference position, the teeth 10 of the earthing up means 8 advantageously intercept the strip 7 of the covering cloth 4, unwound and abutted against/spread out on the ground, and by rotating they hit and consequently cut it substantially transversely with respect to the advancement direction X of the mulching machine 1, separating the strip 7 laid on the ground from the reel 3. Advantageously, in this manner, the teeth 10 execute a precise cutting of the strip 7, since such strip 7 was previously laid in abutment against the ground by the laying means 6.

In accordance with the preferred embodiment illustrated in the enclosed figures, the roller 9 of the earthing up means 8 is attained in substantially cylindrical form and preferably in hollow cylindrical form. More in detail, the roller 9 is advantageously provided with a cylindrical perimeter wall extended around the rotation axis Z and preferably made of metallic material, such as steel.

Advantageously, moreover, the cylindrical perimeter wall of the roller 9 is provided with a plurality of through slits 16, which are preferably distributed along the cylindrical perimeter wall, and in particular along two separate trajectories and substantially distributed as a double helix. In addition, each tooth 10 of the earthing up means 8 is preferably placed to traverse at least one corresponding through slit 16 and is advantageously removably fixed to the roller 9 by means of removable fixing means 21.

In accordance with the preferred embodiment illustrated in the enclosed figures, moreover, the through slits 16 of the roller 9 of the earthing up means 8 are made in the cylindrical wall in pairs that are diametrically aligned with each other. More in detail, each pair of through slits 16 comprises a first through slit 16' and a second through slit 16", advantageously facing the first through slit 16'.

Preferably, the first and the second slit 16', 16" of each pair of slits 16 are aligned along a specific diameter of a circular section of the cylindrical perimeter wall of the roller 9.

Advantageously, moreover, each pair of slits 16 identifies a different diameter of the cylindrical perimeter wall. The different diameters along which the first and the second through slit 16', 16" of each pair of through slits 16 are aligned are also advantageously provided tilted with respect to each other, with respect to the rotation axis Z and preferably they are spaced from each other along the same rotation axis Z.

In particular, the different diameters are provided equidistant from each other along the rotation axis Z and tilted by an angle comprised between 30° and 60°, and more preferably about 45°, with respect to the adjacent diameter. In this manner, the first slits 16' define a first helical trajectory along the cylindrical perimeter wall and the second slits 16" define a second helical trajectory along the cylindrical perimeter wall, which in each point thereof is diametrically opposite with respect to every corresponding point of the first helical trajectory.

In this manner, the through slits 16 are advantageously distributed along the perimeter wall of the roller 9 as a double helix, in which the enveloping of the first through slits 16' of each pair constitutes a first helix and the enveloping of the second through slits 16" of each pair constitutes a second helix of the aforesaid double helix.

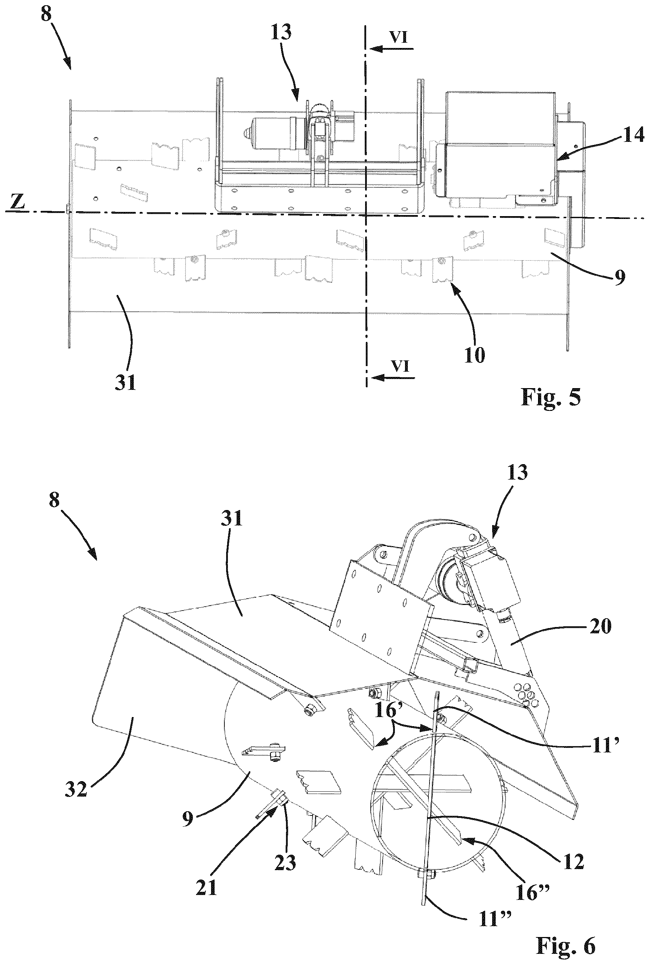

Advantageously, moreover, each tooth 10 of the earthing up means 8 is extended along a diameter of the roller 9, to traverse the cylindrical perimeter wall thereof, and is inserted to traverse the two through slits 16 of a corresponding pair of through slits 16, and more in detail it is placed to traverse both the first and the second through slit 16', 16". In this manner, the teeth 10 of the earthing up means 8 are advantageously provided equidistant from each other along the rotation axis Z of the roller 9 and additionally each tooth 10 is advantageously placed tilted with respect to the tooth 10 adjacent thereto, as indicated in the enclosed figure 6.

In accordance with the preferred embodiment illustrated in the enclosed figure 6, moreover, each tooth 10 of the earthing up means 8 is extended between two end portions 11, and is provided with an intermediate portion 12 placed to connect the two end portions 11. In particular, each of the two end portions 11 of each tooth 10 radially projects outside the roller 9, to traverse one of the two through slits 16 of a corresponding pair of through slits 16, and the intermediate portion 12 is placed to traverse the roller 9, substantially diametrically with respect to its cylindrical wall, between the aforesaid two through slits 16. More in detail, each tooth 10 is advantageously provided with a first end portion 11' and with a second end portion 11", in which the first end portion 11' is placed projectingly beyond the first through slit 16' and the second end portion 11" is placed projectingly beyond the second through slit 16" of a corresponding pair of through slits 16.

Advantageously, moreover, each end portion 11 of the teeth 10 of the earthing up means 8 is provided with a serrated edge 17, extended substantially transverse to the diameter of the roller 9 and intended to come into contact with the ground so as to turn it over. In particular, in accordance with the enclosed figures, the serrated edge 17 of the end portions 11 of the teeth 10 is shaped in trident form so as to better absorb the impact with the ground, which generally has an irregular surface.

Preferably, moreover, each tooth 10 of the earthing up means 8 is made of substantially plate-like shape, i.e. it is provided with a main extension along a lying plane P. In particular, each tooth 10 is preferably made starting from a sheet made of metallic material, such as steel.

In accordance with the embodiment illustrated in the enclosed figure 6, moreover, the lying plane P of each tooth 10 passes through the rotation axis Z of the roller 9 and is tilted with respect to the latter, defining a tilt angle α between the lying plane P and the rotation axis Z. In other words, therefore, the lying plane P of each tooth 10 intersects the rotation axis Z in only one point and does not comprise the rotation axis Z itself.

Advantageously, moreover, the tilt angle α between the lying plane P of each tooth 10 and the rotation axis Z of the roller 9 is comprised between 10° and 45° and preferably is about 20°, as illustrated for example in the enclosed figure 7.

In operation, in this manner, each tooth 10 is during use susceptible of intercepting the ground, placed in a tilted manner with respect to the latter, and in particular it is susceptible of intercepting the ground with a limited portion of its serrated edge 17 so as to exert a greater pressure on the ground itself, in order to more easily turn it over. In addition, during use, each tooth 10 is also susceptible of intercepting the strip 7 of covering cloth 4 placed in a tilted manner with respect to the latter, and in particular it is susceptible of intercepting the strip 7 with a limited portion of its serrated edge 17 so as to exert a greater pressure at such strip 7 in order to more easily break it.

As indicated above, moreover, each tooth 10 is advantageously removably fixed to the roller 9 by means of suitable removable fixing means 21, which are preferably associated with each tooth 10 in proximity to at least one of the two through slits 16 through which the tooth 10 is inserted, and adapted to act as element for blocking the tooth 10 itself in order to prevent the latter from being removed from the through slit 16.

The removable fixing means 21 thus make it advantageously possible to vary the number and the position of the teeth 10 fixed to the roller 9, so as to allow the earthing up means 8 to operate at pre-established zones. For example, it is possible to remove one or more teeth 10 from the roller 9 in order to prevent such teeth 10 from plunging into the ground at a specific ground zone, for example at which a small irrigation channel (not illustrated in the enclosed figures) is arranged which could be damaged by the teeth 10 of the earthing up means 8.

Advantageously, therefore, by removing one or more teeth 10 it is possible to avoid executing the earthing up at a ground zone substantially parallel to the advancement direction X of the mulching machine 1.

In accordance with the enclosed figure 7, the aforesaid removable fixing means 21 comprise at least one lateral shoulder 22, and preferably two lateral shoulders 22, laterally projecting from the first end portion 11' of each tooth 10 and placed in abutment against the cylindrical perimeter wall of the roller 9, blocking the tooth 10 in order to prevent the first end portion 11' from being inserted to traverse the first through slit 16'. In particular, the aforesaid lateral shoulders 22 are extended along the lying plane P of the tooth 10 and are preferably provided with a thickness substantially equal to the thickness of the first end portion 11', i.e. they are advantageously achieved starting from the steel sheet itself, from which also the tooth 10 is attained.

In addition, the removable fixing means 21 advantageously comprise at least one bolt 23 associated with each tooth 10, preferably in proximity to the second through slit 16", placed outside and in abutment against the cylindrical wall of the roller 9 at the second slit 16" itself. Each bolt 23 is advantageously adapted to act as thickness of the tooth 10 in order to prevent its second end portion 11" from being removed from the second through slit 16". More in detail, each bolt 23 of the removable fixing means 21 is provided with a screw, comprising a threaded stem placed to traverse a through hole made on the second end portion 11" of the tooth 10, and with a clamping nut, screwed to the threaded stem of the aforesaid screw. In this manner, each tooth 10 is removably fixed to the roller 9, on one side, by means of the lateral shoulders 22 projecting laterally from the first end portion 11' and, on the other side, by means of the bolts 23 associated with the second end portion 11".

In operation, therefore, each tooth 10 is susceptible of being associated with the roller 9 by inserting its second end portion 11" to traverse, in succession, the first and the second through slit 16', 16", up to bringing the lateral shoulders 22, laterally projecting from the first end portion 11', in abutment against the cylindrical perimeter wall of the roller 9 and subsequently by screwing the bolt 23 to the second end portion 11", which is projectingly placed outside the roller 9, beyond the second through slit 16".

In addition, each tooth 10 is susceptible of being removed from the roller 9 by unscrewing the bolt 23 from the second end portion 11" and subsequently removing the second end portion 11" itself from the second and from the first through slits 16", 16'.

The earthing up means 8 thus conceived are susceptible of being moved by the first and by the second movement means 13, 14 in order to at least partially bury the strip 7 of covering cloth 4 laid on the ground.

More in detail, as indicated above, the first movement means 13 are adapted to move the roller 9 between the interference position and the second portion, so as to bring the teeth 10 respectively to at least partially plunge into the ground and to be lifted from the latter.

More in detail, the first movement means 13 comprise the movable frame 18 which rotatably carries the roller 9 mounted thereon and which is in turn mechanically mounted on the support frame 2, preferably on the rear part with respect to the laying means 6. For example, in accordance with the enclosed figures, the movable frame 18 comprises at least one casing 31, extended around the roller 9 to partially cover the latter and provided with two lateral sides 32 on which the roller 9 is rotatably mounted.

In addition, the first movement means 13 advantageously comprise at least one articulated quadrilateral 19 placed to mechanically connect between the support frame 2 and the movable frame 18. Preferably, the first movement means 13 comprise two articulated quadrilaterals 19, each of which placed to mechanically connect between a lateral flank 30 of the support frame 2 and a corresponding lateral side 32 of the casing 31 of the movable frame 18.

Advantageously, moreover, the first movement means 13 comprise at least one actuator 20, and preferably a linear actuator, operatively associated with the support frame 2 and with the movable frame 18 and adapted to act on the latter in order to move the roller 9 between the interference position and the non-interference position.

In accordance with a preferred embodiment of the present invention, the actuator 20 of the first movement means 13 preferably comprises a pneumatic piston slidably inserted in a containment cylinder, with respect to which the pneumatic piston is susceptible of sliding between an extended position, corresponding to the interference position of the roller 9, and a retracted position, corresponding to the non-interference position of the roller 9. In addition, the aforesaid actuator 20, is advantageously associated with an oil-pressure circuit, of the type known to the man skilled in the art and therefore not described in detail hereinbelow, which is advantageously actuated by electrical power supply means 27, e.g. connected to a power supply battery of the tractor to which the mulching machine 1 is fixed.

Of course, the actuator 20 of the first movement means 13 can be of type different from that described above, without departing from the protective scope of the present patent. For example, it can comprise a hydraulic piston or a screw engaged in a nut screw.

As indicated above, the logic control unit 15 is operatively connected to the aforesaid first movement means 13. In particular, the logic control unit 15 is advantageously configured for varying the distance with respect to the support frame 2 in which the roller 9 of the earthing up means 8 is placed in the interference position. In other words, the logic control unit 15 is advantageously configured for varying the height with respect to the ground in which the roller 9 of the earthing up means 8 is placed in the interference position, so as to vary the depth with which the teeth 10 plunge into the ground and consequently vary the quantity of ground which is turned over by the earthing up means 8.

Advantageously, the present mulching machine 1 also comprises a user interface 24 in data connection with the logic control unit 15 and through which it is possible, for an operator, to set the aforesaid height with respect to the ground in which the roller 9 of the earthing up means 8 is placed in the interference position.

Advantageously, through the user interface 24 it is possible for the operator to also select one from between the first and the second rotation sense V1, V2 in which the second movement means 14 rotate the roller 9 of the earthing up means 8. More in detail, as indicated above, the user interface 24 is in data connection with the logic control unit 15, which in turn is in data connection with the second movement means 14. In operation, therefore, through the user interface 24, the operator of the mulching machine 1 can select the rotation sense along which the roller 9 is moved so as to execute different earthing up operations.

More in detail, the second movement means 14 preferably comprise an electric motor, which is advantageously power supplied by the same electrical power supply means 27 which also power supply the actuator 20 of the first movement means 13. In particular, the aforesaid electric motor of the second movement means 14 is provided with a rotor, which is actuatable to rotate in the first and/or in the second rotation sense V1, V2 and is connected by means of a transmission belt to the roller 9 of the earthing up means 8, so as to rotate the aforesaid roller 9 in the same sense as its rotation sense.

Of course, the second movement means 14 can also comprise a rotary actuator, different with respect to an electric motor, without departing from the protective scope of the present patent.

In order to rotate the rotor 9 when the latter is in the interference position, the mulching machine 1 advantageously also comprises a position sensor, mechanically associated with the first movement means 13 and placed in data connection with the logic control unit 15. In particular, such position sensor is adapted to detect the position in which the first movement means 13 position the roller 9 and is configured for sending a first electrical signal to the logic control unit 15 containing the information of the position of the roller 9. Advantageously, the logic control unit 15 is then configured for analyzing the first electrical signal and for driving the second movement means 14 to rotate the roller 9 when the latter reaches in proximity to the interference position. In particular, the logic control unit 15 is configured for sending, to the second movement means 14, a second or a third electrical signal, in which the second electrical signal drives the second movement means 14 to rotate the roller 9 along the first rotation sense V1 and the third electrical signal drives the second movement means 14 to rotate the roller 9 along the second rotation sense V2.

Advantageously, therefore, by means of the user interface 24, the operator can select which electrical signal to send from the logic control unit 15 to the second movement means 14 so as to select the first or the second rotation sense V1, V2 of the roller 9 of the earthing up means 8. Advantageously, moreover, by means of the user interface 24, the operator can also select the time interval along which the second movement means 14 actuate the roller 9. For such purpose, the logic control unit 15 can also comprise a clock, which is configured for controlling the duration of the time interval of actuation of the second movement means 14.

In accordance with the preferred embodiment illustrated in the enclosed figures, the mulching machine 1 also comprises lateral earthing up means 33, which are mechanically associated with the support frame 2, preferably at its lateral flanks 30, and are adapted to at least partially bury the strip 7 of covering cloth 4 laid on the ground, in particular at two lateral edges thereof. More in detail, the aforesaid lateral earthing up means 33 are mounted on the support frame 2 laterally with respect to the laying means 6 and preferably on the rear part with respect to the latter, in a manner so as to earth up the strip 7 with ground in an adjacent position with respect to the position in which the strip 7 itself comes into contact with the ground itself, executing a lateral earthing up of the strip 7.

Preferably, moreover, the lateral earthing up means 33 execute the aforesaid lateral earthing up immediately after the strip 7 has contacted the ground. In this manner, one prevents the strip 7 from being moved once laid on the ground by the laying means 6. In other words, therefore, the lateral earthing up means 33 laterally earth up the strip 7 of covering cloth 4 as soon as it is laid on the ground by the laying means 6.

Advantageously, as illustrated in the enclosed figures, the lateral earthing up means 33 are mounted on the support frame 2 in a position interposed between the laying means 6 and earthing up means 8 that are described above. In this manner, the earthing up means 8 are adapted to earth up the strip 7 after the latter has been laid on the ground by the laying means 6 and it has been at least partially retained in position on the ground by the lateral earthing up made by the lateral earthing up means 33. Consequently, the earthing up means 8 thus attained cut the strip 7 and precisely bury the first and the second ends 7', 7" of the strip 7, since the strip 7 is stopped on the ground by the lateral earthing up when the earthing up means 8 turn over the ground at the aforesaid ends 7', 7".

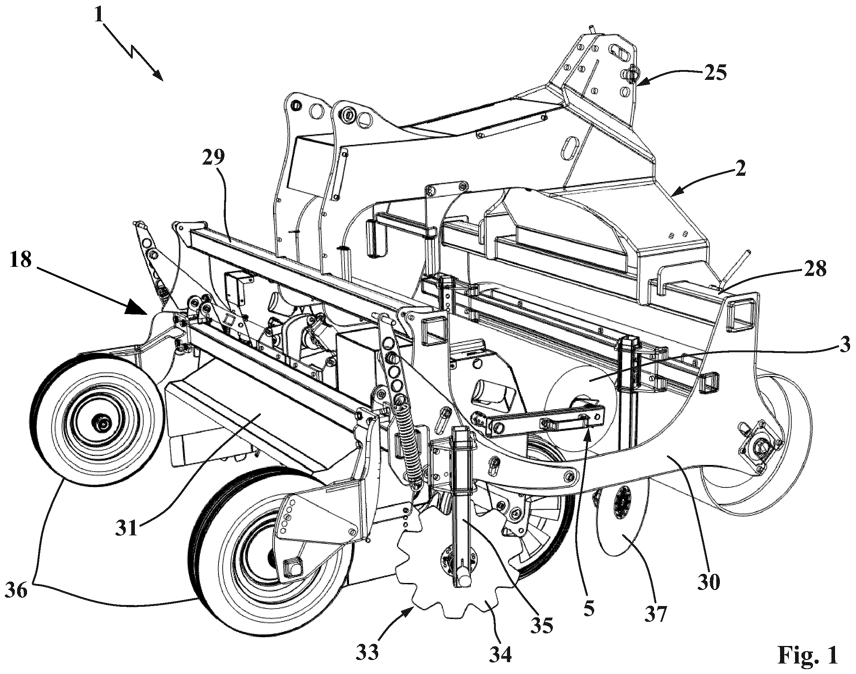

More in detail, the aforesaid lateral earthing up means 33 advantageously comprise a rotating cutter 34, and preferably two rotating cutters 34, each of which rotatably mounted on a first support rod 35 fixed to a corresponding lateral flank 30 of the support frame 2, in particular laterally with respect to the laying means 6. Preferably, each first support rod 35 is fixed to the corresponding lateral flank 30 on the front part with respect to the position in which the movable frame 18 of the earthing up means 6 is fixed to the lateral flank 30 itself, as illustrated in figure 1.

Advantageously, moreover, each rotating cutter 34 is idly mounted on the corresponding first support rod 35 with its rotation axis placed substantially parallel to the ground and is susceptible of being rotated by the rolling friction with the ground. Otherwise, the lateral earthing up means 33 comprise third movement means (not illustrated in the enclosed figures) mechanically connected to each rotating cutter 34 and adapted to rotate the latter. In operation, each rotating cutter 34 of the lateral earthing up means 33 is adapted to turn over the ground laterally with respect to the strip 7 of covering cloth 4, burying one of its two lateral edges.

Advantageously, moreover, in order to more easily turn over the ground, each rotating cutter 34 is provided with a shaped edge, preferably serrated with star form, and more preferably provided with smoothed tips. In particular, the aforesaid shaped edge is particularly suitable for ploughing the ground, since it plunges into the ground with its own projecting portions, which turn over clumps of compact ground and move rigid bodies such as stones, roots or other elements. Of course, the rotating cutter 34 can also be attained in a different embodiment, without departing from the protective scope of the present patent.

Advantageously, the present mulching machine 1 also comprises a second pair of idle wheels 36, which are rotatably associated with the mulching machine 1 on the rear part with respect to the rotating cutters 34 of the lateral earthing up means 33 and adapted to roll on the ground turned over by the lateral earthing up means 33 so as to flatten it, thus sealing the lateral earthing up of the strip 7 of covering cloth 4. In particular, in accordance with the embodiment illustrated in the enclosed figures, each wheel of the second pair of idle wheels 36 is rotatably mounted on the movable frame 18 at one of the two lateral sides 32 of the casing 31.

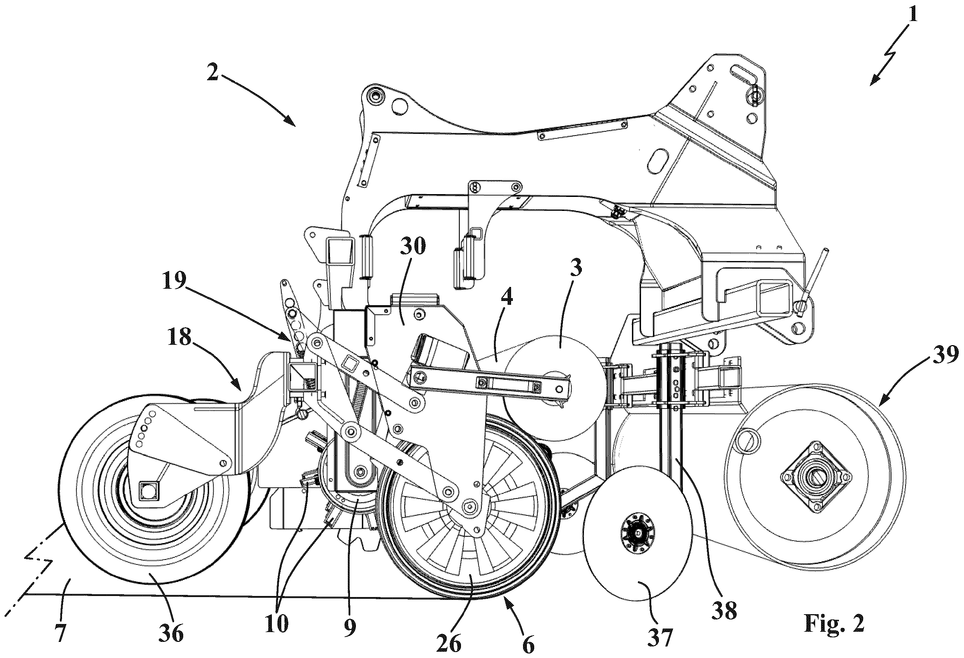

In accordance with the enclosed figures 1 and 2, the present mulching machine 1 also comprises a pair of rotating discs 37, each of which rotatably and idly mounted on a second support rod 38 fixed to one of the lateral flanks 30 of the support frame 2 on the front part with respect to the laying means 6. In operation, each rotating disc 37 is susceptible of rotating via rolling friction with the ground, excavating a furrow in the ground itself, substantially parallel to the advancement direction X of the mulching machine 1. Advantageously, moreover, each rotating disc 37 is mounted on the mulching machine 1 at the two lateral edges of the strip 7 of covering cloth 4 intended to be laid by the laying means 6, so as to excavate the furrow at a ground zone where the corresponding lateral edge of the strip 7 is intended to be laid. In this manner, the strip 7 of covering cloth 4 is advantageously laid on the ground with its two lateral edges placed at a lower height with respect to the remaining strip 7.

Advantageously, in addition, the mulching machine 1 can also be associated with further farming machinery, so as to execute further working of the same ground. For example, in accordance with the enclosed figures, the mulching machine 1 advantageously comprises a convex shaping group 39, mechanically associated with the support frame 2 on the front part with respect to the laying means 6 and adapted to execute a convex shaping of the ground before laying the strip 7 of covering cloth 4.

In addition, the mulching machine 1 can advantageously also comprise a sowing group (not illustrated in the enclosed figures), mechanically associated with the support frame 2 on the rear part with respect to the earthing up means 8 and adapted to perforate the strip 7 of covering cloth 4 and to deposit one or more seeds on the underlying ground.

Advantageously, moreover, the mulching machine 1 can also comprise means for supporting and laying a small irrigation channel (also not illustrated in the enclosed figures), which are mechanically associated with the support frame 2 on the front part with respect to the laying means 6 and are adapted to lay the small irrigation channel before the strip 7 of covering cloth 4 so as to cover such small irrigation channel with the strip 7 itself. Advantageously, in this manner, with the small irrigation channel mounted on the mulching machine 1, it is possible to easily identify the teeth 10 of the earthing up means 8 to be removed from the roller 9, so as to not damage the small irrigation channel itself.

Also forming the object of the present invention is a method for operating a mulching machine for laying a covering cloth on the ground of the type described above and regarding which, for the sake of description simplicity, the same reference nomenclature will be employed. According to the invention, the method for operating the mulching machine 1 comprises a first step of laying an initial end 7' of the strip 7 of covering cloth 4. In the aforesaid first laying step, the laying means 6 unroll the covering cloth 4 from the reel 3 and lay at least the initial end 7' of the strip 7 on the ground.

Advantageously, following such first laying step, the initial end 7' of the strip 7 of covering cloth 4 is interposed between the ground and the earthing up means 8.

More in detail, as indicated above, the support means 5 support the reel 3 in abutment against the idle wheels 26, and during the aforesaid first laying step such idle wheels 26 rotate the reel 3, unrolling the strip 7 of covering cloth 4.

In addition, the idle wheels 26 accompany the strip 7 between the reel 3 and the ground and set it on the latter.

Subsequently, the present method then comprises a first step for earthing up the initial end 7' of the strip 7 of covering cloth 4. In such first earthing up step, the roller 9 of the earthing up means 8 is placed in the interference position and the logic control unit 15 drives the second movement means 14 to rotate the roller 9 in the first rotation sense V1. In addition, the teeth 10 of the earthing up means 8 also rotate along the first rotation sense V1, intercept the ground, turn it over and bury the initial end 7' of the strip 7 of covering cloth 4.

More in detail, in such first earthing up step, the operator of the mulching machine 1 actuates the logic control unit 15, for example by means of the user interface 24. The logic control unit 15 then drives the first movement means 13 to position the roller 9 in the interference position, in particular at a height from the ground established by the operator.

Advantageously, moreover, during such movement of the roller 9 towards the interference position, the position sensor sends the first electrical signal to the logic control unit 15 and, when the roller 9 reaches in proximity to the interference position, the logic control unit 15 sends the second electrical signal to the second movement means 14 which rotate the roller 9 along the first rotation sense V1.

In operation, as schematized in the enclosed figure 9, the teeth 10 of the earthing up means 8 by rotating along the first rotation sense V1 are adapted to turn over the ground and to lift it towards a front portion of the mulching machine 1, i.e. they are adapted to lift the ground towards the initial end 7' of the strip 7 of covering cloth 4, which is buried.

Following the aforesaid first earthing up step, the present method comprises a step of advancing the mulching machine 1 and of laying the strip 7 of covering cloth 4 on the ground, in which the strip 7 is laid interposed between the roller 9 of the earthing up means 8 and the ground.

More in detail, in the aforesaid step of advancing and laying, the mulching machine 1 is moved along the advancement direction X, e.g. towed by a tractor, and the first pair of idle wheels 26 rotates the reel 3, unrolling it and laying the strip 7 of covering cloth 4 on the ground. Advantageously, the present method comprises a step of lateral earthing up of the strip 7 of the covering cloth 4 laid on the ground by the laying means 6, in which the lateral earthing up means 33 turn over the ground laterally with respect to the strip 7 and at least partially bury the two lateral edges of the strip 7 itself.

More in detail, during the aforesaid lateral earthing up step, the rotating cutter 34 of the lateral earthing up means 33 rotates, turning over the ground laterally with respect to the strip 7 and buries the lateral edge of the latter, just laid on the ground.

Preferably, the aforesaid lateral earthing up step occurs immediately after the strip 7 of the covering cloth 4 is laid on the ground by the laying means 6.

More preferably, the aforesaid lateral earthing up step occurs substantially during the entire advancing of the machine 1 and in particular starts immediately after the first step of laying the initial end 7' of the cloth 7, in order to laterally earth up the entire length of the cloth 7 laid on the ground. In this manner, the first earthing up step occurs subsequent to the start of the lateral earthing up step and the earthing up means 8 earth up the initial end 7' of the strip 7 laid on the ground and already laterally earthed up by the aforesaid lateral earthing up step.

In addition, during the first earthing up step, the strip 7 is already stably stopped on the ground by the lateral earthing up operations so as to be able to achieve the earthing up of the initial end 7' without the latter being moved during the earthing up action. In this manner, the earthing up means 8 turn over the ground substantially at the aforesaid initial end 7', substantially burying it for the entire extension thereof (i.e. for the entire width of the strip 7) when the strip 7 is stably stopped on the ground by the lateral earthing up.

Subsequently, for example when the mulching machine 1 reaches in proximity to the end of the ground to be covered, the present method comprises a step of cutting the strip 7 of said covering cloth 4 forming a final end 7" of the strip 7 itself, opposite the initial end 7'. In such cutting step, the first movement means 13 move the roller 9 of the earthing up means 8 into the interference position and at least one of the teeth 10 intercepts the strip 7 of covering cloth 4 and cuts it.

More in detail, during the movement of the roller 9 from the non-interference position to the interference position, the teeth 10 are susceptible of intercepting the strip 7 of covering cloth 4 laid on the ground and subsequently are susceptible of further advancing in order to at least partially plunge into the ground, thus breaking the strip 7.

Advantageously, in such cutting step, the strip 7 of the covering cloth results already laid on the ground by the laying means 6 and preferably is also well-fixed on the ground itself by the lateral earthing up. In this manner, therefore, the teeth 10 precisely cut the strip 7 that is spread out well and fixed on the ground.

The present method also comprises a second step for earthing up the final end 7". According to the idea underlying the present invention, in such second earthing up step the roller 9 of the earthing up means 8 is placed in the interference position and the logic control unit 15 drives the second movement means 14 to rotate the roller 9 of the earthing up means 8 in the second rotation sense V2, opposite with respect to the first rotation sense V1. In addition, the teeth 10 of the earthing up means 8 also rotate along the second rotation sense V2, intercept the ground, turn it over and bury the final end 7" of the strip 7 of covering cloth 4.

Advantageously, moreover, the cutting step and the second earthing up step substantially occur simultaneously and the roller 9 of the earthing up means 8 is rotated along the second rotation sense V2 before the teeth 10 intercept the strip 7 of covering cloth 4.

More in detail, in the aforesaid cutting steps and second earthing up step, the operator of the mulching machine 1 actuates the logic control unit 15, for example by means of the user interface 24. The logic control unit 15 then drives the first movement means 13 to position the roller 9 in the interference position, in particular at a height from the ground established by the operator. Advantageously, moreover, during such movement of the roller 9 towards the interference position, the position sensor sends the first electrical signal to the logic control unit 15 and, when the roller 9 reaches in proximity to the interference position, the logic control unit 15 sends the third electrical signal to the second movement means 14 which rotate the roller 9 along the second rotation sense V2.

In operation, as schematized in the enclosed figure 10, the teeth 10 of the earthing up means 8 by rotating along the second rotation sense V2 are adapted to turn over the ground and to lift it towards a rear portion of the mulching machine 1, i.e. they are adapted to lift the ground towards the final end 7" of the strip 7 of covering cloth 4, which is then buried by the earthing up means 8.

Advantageously, moreover, such second earthing up step occurs in an extremely precise manner, with the earthing up means 8 which substantially earth up the entire final end 7" in the strip 7, i.e. its entire width. Indeed, given that the strip 7 is already laterally earthed up by the aforesaid lateral earthing up step, it results already stably stopped on the ground so as to be able to achieve the earthing up of the final end 7" without the latter being moved during the earthing up action. In this manner, the earthing up means 8 turn over the ground substantially at the final end 7", substantially burying it for the entire extension thereof, when the strip 7 is stably stopped on the ground by the lateral earthing up.

Advantageously, moreover, the present method comprises at least one step of lifting the earthing up means 8, preferably provided between the first earthing up step and the advancing step. More in detail, in the aforesaid lifting step, the movement means 13 move the roller 9 towards the non-interference position, and the logic control unit 15 drives the second movement means 14 to stop the rotation of the roller 9 itself.

Preferably, moreover, the present method also comprises the aforesaid lifting step after the second earthing up step. In this manner, therefore, the roller 9 of the earthing up means 8 is positioned in the interference position only at the first and second earthing up step. Advantageously, moreover, the teeth 10 of the earthing up means 8 are susceptible of being lifted from the ground when the earthing up means 8 themselves are not executing earthing up steps.

Advantageously, moreover, the logic control unit 15 is configured for automatically driving the first and the second movement means 13, 14 to execute the aforesaid lifting step after a pre-established time interval from the start of the first or of the second earthing up step.

Preferably, moreover, the aforesaid first and second earthing up steps and the cutting step are executed with the mulching machine 1 stopped, i.e. with the mulching machine which is not moved along the advancement direction X. In this manner the first and the second earthing up are executed exactly at the initial end and final end 7', 7" of the strip 7 of covering cloth 4.

The mulching machine 1 and its operating method thus conceived therefore attain the pre-established objects and in particular allow executing an automatic mulching of the ground, without requiring the operator to manually execute the steps of earthing up the initial end 7' or the final end 7" of the laid strip 7 of covering cloth 4.

## Claims

1. Mulching machine for laying a covering cloth over a ground to be covered, said mulching machine comprising:
- a support frame (2) susceptible of advancing on the ground along an advancement direction (X);
- at least one reel (3) of a covering cloth (4) intended to be laid on the ground, said reel (3) being rotatably associated with said support frame (2) by means of support means (5);
- laying means (6) mechanically associated with said support frame (2), interposed between said reel (3) and the ground, and adapted to unroll, from said reel (3), at least one strip (7) of said covering cloth (4) and to lay said strip (7) on the ground;
- earthing up means (8) mechanically associated with said support frame (2) and adapted to at least partially bury the strip (7) of said covering cloth (4) laid on the ground; said earthing up means (8) comprising a roller (9) rotatably associated with said support frame (2) and provided with a rotation axis (Z) placed substantially parallel to the ground and orthogonal to said advancement direction (X), and a plurality of teeth (10) mechanically connected to said roller (9) and projecting outside the latter radially with respect to said rotation axis (Z);
- first movement means (13), placed to mechanically connect between said support frame (2) and said roller (9), in order to move said roller (9) between an interference position, in which said roller (9) is in a distal position with respect to said support frame (2) and at least one of said teeth (10) is susceptible of intercepting the ground, and a non-interference position, in which said roller (9) is in a proximal position with respect to said support frame (2) and said teeth (10) are susceptible of not intercepting the ground;
- second movement means (14), mechanically associated with said roller (9), in order to rotate said roller (9) around said rotation axis (Z);
said mulching machine being **characterized in that** said second movement means (14) are adapted to rotate said roller (9) alternately in a first rotation sense (V1) and in a second rotation sense (V2), opposite with respect to said first rotation sense (V1);
said mulching machine also comprising a logic control unit (15) operatively connected to said first and second movement means (13, 14) and configured for driving said second movement means (14) to rotate said roller (9) in said opposite rotation senses (V1, V2), with said roller (9) placed in said interference position, in order to earth up two opposite ends of said strip (7) with the teeth (10) of said earthing up means (8) rotating in said two rotation senses (V1, V2).

2. Mulching machine according to claim 1, **characterized in that** the roller (9) of said earthing up means (8) is provided with a cylindrical perimeter wall extended around said rotation axis (Z) and provided with a plurality of through slits (16); each tooth (10) of said earthing up means (8) being placed to traverse at least one corresponding said through slit (16).

3. Mulching machine according to claim 2, **characterized in that** the through slits (16) of the roller (9) of said earthing up means (8) are made in said cylindrical wall in pairs that are diametrically aligned with each other;
each said tooth (10) extended along a diameter of said roller (9), to traverse said cylindrical perimeter wall, and being inserted to traverse a corresponding pair of through slits (16) of said plurality of through slits (16).

4. Mulching machine according to claim 3, **characterized in that** each tooth (10) of said earthing up means (8) is extended between two end portions (11), each of which radially projecting outside said roller (9), to traverse one of the two through slits (16) of a corresponding of said pairs of through slits (16), and is provided with a serrated edge (17), substantially transverse to a diameter of said roller (9) and intended to come into contact with the ground.

5. Mulching machine according to any one of the claims 2 to 4, **characterized in that** the teeth (10) of said earthing up means (8) are removably fixed to said roller (9); said mulching machine comprising removable fixing means (21) mechanically associated with each tooth (10) of said earthing up means (8) in proximity to a corresponding through slit (16) of said roller (9) in order to removably fix said teeth (10) to said roller (9).

6. Mulching machine according to any one of the preceding claims, **characterized in that** each tooth (10) of said earthing up means (8) is made of a substantially plate-like shape and is provided with a lying plane (P) passing through the rotation axis (Z) of said roller (9) and tilted with respect to the latter.

7. Mulching machine according to any one of the preceding claims, **characterized in that** said first movement means (13) comprise:
- a movable frame (18) mechanically mounted on said support frame (2) and rotatably carrying said roller (9) mounted thereon;
- at least one articulated quadrilateral (19) placed to mechanically connect between said support frame (2) and said movable frame (18);
- an actuator (20) operatively associated with said support frame (2) and with said movable frame (18) and adapted to act on said movable frame (18) in order to move said roller (9) between said interference position and said non-interference position.

8. Mulching machine according to any one of the preceding claims, **characterized in that** said logic control unit (15), operatively connected to said first movement means (13), is configured for varying the distance with respect to said support frame (2) in which the roller (9) of said earthing up means (8) is placed in said interference position.

9. Mulching machine according to any one of the preceding claims, **characterized in that** the roller (9) of said earthing up means (8) is mounted on said support frame (2) on the rear part with respect to said laying means (6).

10. Mulching machine according to any one of the preceding claims, **characterized in that** it comprises lateral earthing up means (33) adapted to at least partially bury the strip (7) of said covering cloth (4) laid on the ground at two lateral edges thereof;
said lateral earthing up means (33) being mounted on said support frame (2) on the rear part with respect to said laying means (6), interposed between said laying means (6) and said earthing up means (8).

11. Method for operating a mulching machine according to claim 1, which comprises:
- a first step of laying an initial end (7') of the strip (7) of said covering cloth (4), in which said laying means (6) unroll said covering cloth (4) from said reel (3) and lay on the ground at least the initial end (7') of the strip (7) of said covering cloth (4);
- a first step of earthing up the initial end (7') of the strip (7) of said covering cloth (4);
- a step of advancing said mulching machine and laying on the ground the strip (7) of said covering cloth (4) interposed between said roller (9) and the ground;
- a step of cutting the strip (7) of said covering cloth (4), forming a final end (7") of said strip (7) opposite said initial end (7'), in which said first movement means (13) move said roller (9) into said interference position and in which at least one of said teeth (10) intercepts the strip (7) of said covering cloth (4) and cuts it;
- a second step of earthing up said final end (7");
said method being **characterized in that**:
- in said first earthing up step, with said roller (9) in said interference position, said logic control unit (15) drives said second movement means (14) to rotate said roller (9) in said first rotation sense (V1) with said teeth (10) which rotate along said first rotation sense (V1), intercept and turn over the ground and bury the initial end (7') of the strip (7) of said covering cloth (4);
- in said second earthing up step, with said roller (9) in said interference position, said logic control unit (15) drives said second movement means (14) to rotate said roller (9) in said second rotation sense (V2), opposite said first rotation sense (V1), with said teeth (10) which rotate along said second rotation sense (V2), intercept and turn over the ground and bury the final end (7") of the strip (7) of said covering cloth (4).

12. Operating method according to claim 11, **characterized in that** it comprises, between said first earthing up step and said advancement step, a step of lifting said earthing up means (8) in which said first movement means (13) move said roller (9) towards said non-interference position, and said logic control unit (15) drives said second movement means (14) to stop the rotation of said roller (9).

13. Method according to claim 11 or 12 for operating a mulching machine according to claim 10, **characterized in that** it comprises a step of lateral earthing up of the strip (7) of said covering cloth (4) laid on the ground by said laying means (6), in which said lateral earthing up means (33) turn over the ground laterally with respect to the strip (7) of said covering cloth (4) and at least partially bury two lateral edges of said strip (7).

## Patentansprüche

1. Mulchmaschine zum Auslegen von Abdecktuch auf einem abzudeckenden Boden, wobei die besagte Mulchmaschine Folgendes umfasst:
- einen Tragrahmen (2), der geeignet ist, sich entlang einer Vorschubrichtung (X) auf dem Boden vorwärts zu bewegen;
- mindestens eine Spule (3) eines Abdecktuchs (4), das dazu bestimmt ist, auf dem Boden ausgelegt zu werden, wobei die besagte Spule (3) mit dem besagten Tragrahmen (2) mittels Tragelementen (5) drehbar verbunden ist;
- Auslegeelemente (6), die mechanisch mit dem besagten Tragrahmen (2) verbunden und zwischen der besagten Spule (3) und dem Boden eingefügt und geeignet sind, von der besagten Spule (3) mindestens einen Streifen (7) des besagten Abdecktuchs (4) abzurollen und den besagten Streifen (7) auf dem Boden auszulegen;
- Häufelelemente (8), die mechanisch mit dem besagten Tragrahmen (2) verbunden und geeignet sind, den Streifen (7) des besagten auf dem Boden ausgelegten Abdecktuchs (4) mindestens teilweise zu vergraben; wobei die besagten Häufelelemente (8) eine drehbar mit dem besagten Tragrahmen (2) verbundene Rolle (9) umfassen, die mit einer Drehachse (Z) ausgestattet und im Wesentlichen parallel zum Boden und orthogonal zu der besagten Vorschubrichtung (X) platziert ist, und eine Vielzahl von mechanisch mit der besagten Rolle (9) verbunden Zähnen (10), die im Verhältnis zu der besagten Drehachse (Z) radial von der letzteren vorstehen;
- erste Bewegungselemente (13), die zur mechanischen Verbindung zwischen dem besagten Tragrahmen (2) und der besagten Rolle (9) platziert sind, um die besagte Rolle (9) zwischen einer interferierenden Position, in der die besagte Rolle (9) sich im Verhältnis zu dem besagten Tragrahmen (2) in einer distalen Position befindet und mindestens einer der besagten Zähne (10) geeignet ist, den Boden zu erfassen, und einer nicht interferierenden Position, in der die besagte Rolle (9) sich im Verhältnis zu dem besagten Tragrahmen (2) in einer proximalen Position befindet und die besagten Zähne (10) geeignet sind, den Boden nicht zu erfassen, zu bewegen;
- zweite Bewegungselemente (14), die mechanisch mit der besagten Rolle (9) verbunden sind, um die besagte Rolle (9) um die besagte Drehachse (Z) zu drehen; wobei die besagte Mulchmaschine **dadurch gekennzeichnet ist, dass** die besagten zweiten Bewegungselemente (14) geeignet sind, die besagte Rolle (9) abwechselnd in einer ersten Drehrichtung (V1) und in einer im Verhältnis zu der besagten ersten Drehrichtung (V1) entgegengesetzten zweiten Drehrichtung (V2) zu drehen;
wobei die besagte Mulchmaschine ebenfalls ein logisches Steuergerät (15) umfasst, das operativ mit den besagten ersten und zweiten Bewegungselementen (13, 14) verbunden und dazu konfiguriert ist, die besagten zweiten Bewegungselemente (14) anzutreiben, um die besagte Rolle (9) in den besagten entgegengesetzten Drehrichtungen (V1, V2) zu drehen, wobei die besagte Rolle (9) in der besagten interferierenden Position platziert ist, um zwei gegenüberliegende Enden des besagten Streifens (7) mit den Zähnen (10) der besagten Häufelelemente (8) durch Drehen in den besagten beiden Drehrichtungen (V1, V2) zu häufeln.

2. Mulchmaschine nach Anspruch 1, **dadurch gekennzeichnet, dass** die Rolle (9) der besagten Häufelelemente (8) mit einer um die besagte Drehachse (Z) verlaufenden zylindrischen Umfangswand ausgestattet ist und mit einer Vielzahl von durchgehenden Schlitzen (16) ausgestattet ist; wobei jeder Zahn (10) der besagten Häufelelemente (8) so platziert ist, dass er mindestens einen entsprechenden besagten durchgehenden Schlitz (16) überquert.

3. Mulchmaschine nach Anspruch 2, **dadurch gekennzeichnet, dass** die durchgehenden Schlitze (16) der Rolle (9) der besagten Häufelelemente (8) in der besagten zylindrischen Wand in diametral miteinander ausgerichteten Paaren angebracht sind; wobei jeder besagte Zahn (10) entlang eines Durchmessers der besagten Rolle (9) verläuft, um die besagte zylindrische Umfangswand zu überqueren und eingesetzt ist, um ein entsprechendes Paar von durchgehenden Schlitzen (16) der besagten Vielzahl durchgehender Schlitze (16) zu überqueren.

4. Mulchmaschine nach Anspruch 3, **dadurch gekennzeichnet, dass** jeder Zahn (10) der besagten Häufelelemente (8) zwischen zwei Endabschnitten (11) verläuft, von denen jeder radial über die besagte Rolle (9) hinausragt, um einen der beiden durchgehenden Schlitze (16) eines entsprechenden der besagten Paare durchgehender Schlitze (16) zu überqueren, und mit einem gezahnten Rand (17) ausgestattet ist, der im Wesentlichen quer zu einem Durchmesser der besagten Rolle (9) ist und dazu bestimmt ist, mit dem Boden in Kontakt zu geraten.

5. Mulchmaschine nach irgendeinem der Ansprüche 2 bis 4, **dadurch gekennzeichnet**, das die Zähne (10) der besagten Häufelelemente (8) lösbar an der besagten Rolle (9) befestigt sind; wobei die besagte Mulchmaschine mechanisch mit jedem Zahn (10) der besagten Häufelelemente (8) verbundene lösbare Befestigungsmittel (21) in der Nähe eines entsprechenden durchgehenden Schlitzes (16) der besagten Rolle (9) umfasst, um den besagten Zahn (10) lösbar an der besagten Rolle (9) zu befestigen.

6. Mulchmaschine nach irgendeinem der vorangegangenen Ansprüche, **dadurch gekennzeichnet, dass** jeder Zahn (10) der besagten Häufelelemente (8) aus einer im Wesentlichen plattenähnlichen Form besteht und eine Ebene (P) aufweist, die durch die Drehachse (Z) der besagten Rolle (9) verläuft und im Verhältnis zu der letzteren geneigt ist.

7. Mulchmaschine nach irgendeinem der vorangegangenen Ansprüche, **dadurch gekennzeichnet, dass** die ersten Bewegungselemente (13) Folgendes umfassen:
- einen beweglichen Rahmen (18), der mechanisch an dem besagten Tragrahmen (2) montiert ist und die besagte darauf montierte Rolle (9) drehbar trägt;
- mindestens ein gelenkiges Viereck (19), das zur mechanischen Verbindung zwischen dem besagten Tragrahmen (2) und dem besagten beweglichen Rahmen (18) platziert ist;
- einen Stellantrieb (20), der operativ mit dem besagten Tragrahmen (2) und mit dem besagten beweglichen Rahmen (18) verbunden und geeignet ist, auf den besagten beweglichen Rahmen (18) zu wirken, um die besagte Rolle (9) zwischen der besagten interferierenden Position und der besagten nicht interferierenden Position zu bewegen.

8. Mulchmaschine nach irgendeinem der vorangegangenen Ansprüche, **dadurch gekennzeichnet, dass** das operativ mit den besagten ersten Bewegungsmitteln (13) verbundene besagte logische Steuergerät (15) darauf ausgelegt ist, den Abstand im Verhältnis zu dem besagten Tragrahmen (2), in dem die Rolle (9) der besagten Häufelelemente (8) in der besagten interferierenden Position platziert ist, zu ändern.

9. Mulchmaschine nach irgendeinem der vorangegangenen Ansprüche, **dadurch gekennzeichnet, dass** die Rolle (9) der besagten Häufelelemente (8) auf dem besagten Tragrahmen (2) im Verhältnis zu den Auslegeelementen (6) am Heckteil montiert ist.

10. Mulchmaschine nach irgendeinem der vorangegangenen Ansprüche, **dadurch gekennzeichnet, dass** sie seitliche Häufelelemente (33) umfasst, die geeignet sind, den Streifen (7) des auf dem Boden ausgelegten besagten Abdecktuchs (4) an zwei seitlichen Rändern desselben mindestens teilweise zu vergraben;
wobei die besagten seitlichen Häufelelemente (33) an dem besagten Tragrahmen (2) im Verhältnis zu den besagten Auslegeelementen (6) am Heckteil, zwischen den besagten Auslegeelementen (6) und den besagten Häufelelementen (8) eingefügt, montiert sind.

11. Verfahren zum Betrieb einer Mulchmaschine nach Anspruch 1, die Folgendes umfasst:
- einen ersten Schritt von Auslegens eines Anfangsendes (7') des Streifens (7) des besagten Abdecktuchs (4), bei dem die besagten Auslegeelemente (6) das Abdecktuch (4) von der besagten Spule (3) abrollen und mindestens das Anfangsende (7') des Streifens (7) des besagten Abdecktuchs (4) auf dem Boden auslegen;
- einen ersten Schritt von Häufeln des Anfangsendes (7') des Streifens (7) des besagten Abdecktuchs (4);
- einen Schritt von Vorschub der besagten Mulchmaschine und Auslegen des Streifens (7) des zwischen der besagten Rolle (9) und dem Boden befindlichen besagten Abdecktuchs (4);
- einen Schritt von Abschneiden des Streifens (7) des besagten Abdecktuchs (4) unter Bildung eines Abschlussendes (7") des besagten Streifens (7) gegenüber dem besagten Anfangsende (7'), bei dem die besagten ersten Bewegungselemente (13) die besagte Rolle (9) in die besagte interferierende Position bewegen und bei dem mindestens einer der besagten Zähne (10) den Streifen (7) des besagten Abdecktuchs (4) erfasst und abschneidet;
- einen zweiten Schritt von Häufeln des besagten Abschlussendes (7");
wobei das Verfahren **dadurch gekennzeichnet ist, dass:**
- bei dem besagten ersten Häufelschritt, mit der besagten Rolle (9) in der besagten interferierenden Position, das besagte logische Steuergerät (15) die besagten zweiten Bewegungselemente (14) antreibt, um die besagte Rolle (9) in der besagten ersten Drehrichtung (V1) mit den besagten Zähnen (10) zu drehen, die entlang der besagten ersten Drehrichtung (V1) drehen, den Boden erfassen und umgraben und das Anfangsende (7') des Streifens (7) des besagten Abdecktuchs (4) vergraben;
- bei dem besagten zweiten Häufelschritt, mit der besagten Rolle (9) in der besagten interferierenden Position, das besagte logische Steuergerät (15) die besagten zweiten Bewegungselemente (14) antreibt, um die besagte Rolle (9) in der besagten zweiten Drehrichtung (V1) entgegengesetzt zu der besagten ersten Drehrichtung (V1) mit den besagten Zähnen (10) zu drehen, die entlang der besagten zweiten Drehrichtung (V2) drehen, den Boden erfassen und umgraben und das Abschlussende (7") des Streifens (7) des besagten Abdecktuchs (4) vergraben.

12. Betriebsverfahren nach Anspruch 11, **dadurch gekennzeichnet, dass** es zwischen dem besagten ersten Häufelschritt und dem besagten Vorschubschritt einen Schritt von Anheben der besagten Häufelelemente (8) umfasst, bei dem die besagten ersten Bewegungselemente (13) die besagte Rolle (9) in Richtung der besagten nicht interferierenden Position bewegen und das besagte logische Steuergerät (15) die besagten zweiten Bewegungselemente (14) antreibt, um die Drehung der besagten Rolle (9) zu stoppen.

13. Verfahren nach Anspruch 11 oder 12 zum Betrieb einer Mulchmaschine nach Anspruch 10, **dadurch gekennzeichnet, dass** es einen Schritt von seitlichem Häufeln des Streifens (7) des von den besagten Auslegeelementen (6) auf dem Boden ausgelegten besagten Abdecktuchs (4) umfasst, bei dem die besagten seitlichen Häufelelemente (33) den Boden im Verhältnis zu dem Streifen (7) des besagten Abdecktuchs (4) seitlich umgraben und mindestens zwei seitliche Ränder des besagten Streifens (7) teilweise vergraben.

## Revendications

1. Machine de paillage pour la pose d'un tissu de revêtement sur un sol à couvrir, ladite machine de paillage comprenant :
- un châssis de support (2) susceptible d'avancer sur le sol dans une direction d'avancement (X) ;
- au moins un dévidoir (3) d'un tissu de revêtement (4) conçu pour être déposé sur le sol, ledit dévidoir (3) étant associé de façon rotative avec le châssis de support (2) par des moyens de support (5) ;
- des moyens de pose (6) associés mécaniquement avec ledit châssis de support (2), interposés entre ledit dévidoir (3) et le sol, et aptes à dérouler, à partir dudit dévidoir (3), au moins une bande (7) dudit tissu de revêtement (4) et à poser ladite bande (7) sur le sol ;
- des moyens de buttage (8) mécaniquement associés avec ledit châssis de support (2) et aptes, partiellement au moins, à enterrer la bande (7) dudit tissu de revêtement (4) déposés sur le sol ; lesdits moyens de buttage (8) comprenant un rouleau (9) associé de façon rotative avec ledit châssis de support (2) et étant muni d'un axe de rotation (Z) disposé de façon essentiellement parallèle au sol et perpendiculaire à ladite direction d'avancement (X), et une pluralité de dents (10) mécaniquement raccordées audit rouleau (9) et se projetant vers l'extérieur de celui-ci radialement par rapport audit axe de rotation (Z) ;
- des premiers moyens de déplacement (13) placés de façon à se raccorder mécaniquement entre ledit châssis de support (2) et ledit rouleau (9), afin de déplacer ledit rouleau (9) entre une position d'interférence dans laquelle ledit rouleau (9) est dans une position distale par rapport audit châssis de support (2) et au moins l'une desdites dents (10) est susceptible d'intercepter le sol, et une position de non-interférence dans laquelle ledit rouleau (9) est dans une position proximale par rapport audit châssis de support (2) et lesdites dents (10) sont susceptibles de ne pas intercepter le sol ;
- des deuxièmes moyens de déplacement (14) mécaniquement associés avec ledit rouleau (9), afin de faire tourner ledit rouleau (9) autour dudit axe de rotation (Z) ; ladite machine de paillage étant **caractérisée en ce que** lesdits deuxièmes moyens de déplacement (14) sont aptes à faire tourner ledit rouleau (9) en alternance dans un premier sens de rotation (V1) et dans un deuxième sens de rotation (V2), opposé audit premier sens de rotation (V1) ;
ladite machine de paillage comprenant également une unité de contrôle logique (15) raccordée de façon opérationnelle auxdits premiers et deuxièmes moyens de déplacement (13, 14) et configurée pour piloter lesdits deuxièmes moyens de déplacement (14) afin de faire tourner ledit rouleau (9) dans lesdits sens de rotation opposés (V1, V2), avec ledit rouleau (9) placé dans ladite position d'interférence, afin de butter deux extrémités opposées de ladite bande (7) avec les dents (10) desdits moyens de buttage (8) en rotation dans lesdits deux sens de rotations (V1, V2).

2. Machine de paillage selon la revendication 1, **caractérisée en ce que** le rouleau (9) desdits moyens de buttage (8) est muni d'une paroi périmétrale cylindrique s'étendant tout autour dudit axe de rotation (Z) et muni d'une pluralité de fentes traversantes (16) ; chaque dent (10) desdits moyens de buttage (8) étant placée de sorte à traverser au moins une correspondantes desdites fentes traversantes (16).

3. Machine de paillage selon la revendication 2, **caractérisée en ce que** les fentes traversantes (16) du rouleau (9) des moyens de buttage (8) sont percées dans ladite paroi cylindrique par paires alignées entre elles dans le sens du diamètre ; chacune desdites dents (10) s'étendant le long d'un diamètre dudit rouleau (9), pour traverser ladite paroi périmétrale cylindrique, et étant insérée pour traverser une paire correspondante de fentes traversantes (16) de ladite pluralité de fentes traversantes (16).

4. Machine de paillage selon la revendication 3, **caractérisée en ce que** chaque dent (10) desdits moyens de buttage (8) s'étend entre deux portions d'extrémité (11), chacune desquelles se projetant radialement hors dudit rouleau (9), pour traverser l'une des deux fentes traversantes (16) d'une correspondante desdites paires de fentes traversantes (16), et est munie d'un tranchant dentelé (17), essentiellement transversal à un diamètre dudit rouleau (9) et conçu pour entrer en contact avec le sol.

5. Machine de paillage selon l'une quelconque des revendications 2 à 4, **caractérisée en ce que** les dents (10) desdits moyens de buttage (8) sont fixées de façon amovible audit rouleau (9) ; ladite machine de paillage comprenant des moyens de fixation amovibles (21) mécaniquement associés avec chaque dent (10) desdits moyens de buttage (8) à proximité d'une fente traversante (16) correspondante dudit rouleau (9) de sorte à fixer de façon amovible ladite dent (10) audit rouleau (9).

6. Machine de paillage selon l'une quelconque des revendications précédentes, **caractérisée en ce que** chaque dent (10) desdits moyens de buttage (8) est réalisée dans une forme essentiellement en plaque et est munie d'un plan horizontal (P) passant à travers l'axe de rotation (Z) dudit rouleau (9) et incliné par rapport à ce dernier.

7. Machine de paillage selon l'une quelconque des revendications précédentes, **caractérisée en ce que** lesdits premiers moyens de déplacement (13) comprennent :
- un châssis mobile (18) monté mécaniquement sur ledit châssis de support (2) et portant de façon rotative ledit rouleau (9) monté dessus ;
- au moins un quadrilatère articulé (19) placé pour se raccorder mécaniquement entre ledit châssis de support (2) et ledit châssis mobile (18) ;
- un actionneur (20) associé de façon opérationnelle avec ledit châssis de support (2) et avec ledit châssis mobile (18) et apte à agir sur ledit châssis mobile (18) de sorte à déplacer ledit rouleau (9) entre ladite position d'interférence et ladite position de non-interférence.

8. Machine de paillage selon l'une quelconque des revendications précédentes, **caractérisée en ce que** ladite unité de contrôle logique (15), raccordée de façon opérationnelle auxdits premiers moyens de déplacement (13), est configurée pour changer la distance par rapport audit châssis de support (2) dans lequel le rouleau (9) desdits moyens de buttage (8) est placé dans ladite position d'interférence.

9. Machine de paillage selon l'une quelconque des revendications précédentes, **caractérisée en ce que** le rouleau (9) desdits moyens de buttage (8) est monté sur ledit châssis de support (2) sur la partie arrière par rapport auxdits moyens de pose (6).

10. Machine de paillage selon l'une quelconque des revendications précédentes, **caractérisée en ce qu'**elle comprend des moyens de buttage latéral (33) aptes à enterrer au moins partiellement la bande (7) dudit tissu de revêtement (4) déposée sur le sol sur deux bords latéraux de celui-ci ;
lesdits moyens de buttage latéral (33) étant montés sur ledit châssis de support (2) sur la partie arrière par rapport auxdits moyens de pose (6), interposés entre lesdits moyens de pose (6) et lesdits moyens de buttage (8).

11. Procédé de fonctionnement d'une machine de paillage selon la revendication 1, comprenant :
- une première étape de pose d'une extrémité initiale (7') de la bande (7) dudit tissu de revêtement (4), dans laquelle lesdits moyens de pose (6) déroulent ledit tissu de revêtement (4) à partir dudit dévidoir (3) et déposent au sol au moins l'extrémité initiale (7') de la bande (7) dudit tissu de revêtement (4) ;
- une première étape de buttage de l'extrémité initiale (7') de la bande (7) dudit tissu de revêtement (4) ;
- une étape d'avancement de ladite machine de paillage et de pose au sol de la bande (7) dudit tissu de revêtement (4) interposé entre le rouleau (9) et le sol ;
- une étape de coupe de la bande (7) dudit tissu de revêtement (4), formant une extrémité finale (7") de ladite bande (7) opposée à ladite bande initiale (7'), dans laquelle lesdits premiers moyens de déplacement (13) déplacent ledit rouleau (9) dans ladite position d'interférence et dans laquelle au moins l'une desdites dents (10) intercepte la bande (7) dudit tissu de revêtement (4) et la coupe ;
- une deuxième étape de buttage de ladite extrémité finale (7") ;
ledit procédé étant **caractérisé en ce que** :
- dans ladite première étape de buttage, avec ledit rouleau (9) dans ladite position d'interférence, ladite unité de contrôle logique (15) entraîne lesdits deuxièmes moyens de déplacement (14) pour faire tourner ledit rouleau (9) dans ledit premier sens de rotation (V1) avec lesdites dents (10) tournant selon ledit premier sens de rotation (V1), intercepter et retourner le sol et enterrer l'extrémité initiale (7') de la bande (7) dudit tissu de revêtement (4) ;
- dans ladite deuxième étape de buttage, avec ledit rouleau (9) dans ladite position d'interférence, ladite unité de contrôle logique (15) entraîne lesdits deuxièmes moyens de déplacement (14) pour faire tourner ledit rouleau (9) dans ledit deuxième sens de rotation (V2), opposé audit premier sens de rotation (V1), avec lesdits dents (10) tournant selon ledit deuxième sens de rotation (V2), intercepter et retourner le sol et enterrer l'extrémité finale (7") de la bande (7) dudit tissu de revêtement (4).

12. Procédé de fonctionnement selon la revendication 11, **caractérisé en ce qu'**il comprend, entre ladite première étape de buttage et ladite étape d'avancement, une étape de soulèvement desdits moyens de buttage (8) dans laquelle lesdits premiers moyens de déplacement (13) déplacent ledit rouleau (9) vers ladite position de non-interférence, et ladite unité de contrôle logique (15) entraîne lesdits deuxièmes moyens de déplacement (14) pour arrêter la rotation dudit rouleau (9).

13. Procédé selon la revendication 11 ou 12 pour le fonctionnement d'une machine de paillage selon la revendication 10, **caractérisé en ce qu'**il comprend une étape de buttage latéral de la bande (7) dudit tissu de revêtement (4) déposée sur le sol par lesdits moyens de pose (6), dans laquelle lesdits moyens de buttage latéral (33) retournent le sol latéralement par rapport à la bande (7) dudit tissu de revêtement (4) et enterrent au moins partiellement deux bords latéraux de ladite bande (7).
